# EUROPÄISCHE PATENTSCHRIFT

(11) **EP 3 818 196 B1**
(45) Veröffentlichungstag und Bekanntmachung des Hinweises auf die Patenterteilung: **02.12.2026**
(21) Anmeldenummer: 19737675.9
(22) Anmeldetag: 28.06.2019
(51) Int. Cl.: H01M 8/0273, H01M 8/0286, H01M 8/1018, C25B 9/23

(54) **VERFAHREN ZUM HERSTELLEN EINER ELEKTROCHEMISCH AKTIVEN EINHEIT UND TRÄGERELEMENT FÜR EINE BAUGRUPPE EINER ELEKTROCHEMISCH AKTIVEN EINHEIT**
METHOD FOR PRODUCING AN ELECTROCHEMICALLY ACTIVE UNIT AND CARRIER ELEMENT FOR AN ASSEMBLY OF AN ELECTROCHEMICALLY ACTIVE UNIT
PROCÉDÉ DE FABRICATION D'UNE UNITÉ À ACTION ÉLECTROCHIMIQUE ET ÉLÉMENT SUPPORT D'UN MODULE D'UNE UNITÉ À ACTION ÉLECTROCHIMIQUE

(30) Priorität: 02.07.2018 DE 102018115997
(43) Veröffentlichungstag der Anmeldung: 12.05.2021
(73) Patentinhaber: EKPO Fuel Cell Technologies GmbH, 72581 Dettingen (DE)
(72) Erfinder: STAHL, Peter, 72555 Metzingen (DE); KRAFT, Jürgen, 72555 Metzingen (DE)
(74) Vertreter: Hoeger, Stellrecht & Partner Patentanwälte mbB
(86) Internationale Anmeldenummer: PCT/EP2019/067367
(87) Internationale Veröffentlichungsnummer: WO 2020/007733

(56) Entgegenhaltungen:
- DE-A1- 102007 030 343
- DE-A1- 102011 052 562
- DE-A1- 102016 205 043
- US-A1- 2006 090 317
- US-A1- 2007 003 821
- US-A1- 2008 142 152

## Beschreibung

Die vorliegende Erfindung betrifft ein Verfahren zum Herstellen einer elektrochemisch aktiven Einheit, die eine Membran und mindestens eine Baugruppe, welche eine Gasdiffusionslage und ein an der Gasdiffusionslage erzeugtes Dichtelement umfasst, umfasst.

Eine solche Baugruppe wird als Gasdiffusionslage-Dichtelement-Einheit bezeichnet.

Eine elektrochemisch aktive Einheit, welche eine Membran und mindestens eine solche Baugruppe umfasst, kann zusammen mit jeweils einer Bipolarplatte eine elektrochemische Einheit einer elektrochemischen Vorrichtung bilden, welche beispielsweise als eine Brennstoffzellenvorrichtung oder als ein Elektrolyseur ausgebildet ist.

Die elektrochemische Vorrichtung umfasst vorzugsweise mehrere in einer Stapelrichtung übereinander angeordnete elektrochemische Einheiten sowie vorzugsweise zwei Endplatten, zwischen denen der Stapel von elektrochemischen Einheiten angeordnet ist und welche mittels einer Spannvorrichtung gegeneinander verspannbar sind, um die dazwischen angeordneten elektrochemischen Einheiten und insbesondere deren Dichtelemente mit einer längs der Stapelrichtung gerichteten Spannkraft zu beaufschlagen.

In Brennstoffzellenvorrichtungen und in Elektrolyseuren werden in verschiedenen Ebenen einer elektrochemischen Einheit und, je nach Design, auch in verschiedenen Bereichen derselben Ebene unterschiedliche Medien geführt. Diese Medien können insbesondere ein anodisches Fluid (Brenngas), ein kathodisches Fluid (Oxidationsmittel) und gegebenenfalls auch ein fluides Kühlmittel sein.

Die der elektrochemischen Vorrichtung zuzuführenden Medien (kathodisches Fluid, anodisches Fluid, Kühlmittel) werden mittels einer Medienverteilungsstruktur (auch als "Manifold" bezeichnet) mit Medium-Zuführkanälen und Medium-Abführkanälen, welche sich in der Stapelrichtung der elektrochemischen Vorrichtung erstrecken, den verschiedenen Ebenen der elektrochemischen Vorrichtung zugeführt oder aus den verschiedenen Ebenen der elektrochemischen Vorrichtung abgeführt und müssen jeweils aus einem Medium-Zuführkanal dem Strömungsfeld (Flow Field) des betreffenden Mediums in einer elektrochemischen Einheit zugeführt und aus dem Strömungsfeld wieder in einen Medium-Abführkanal abgeführt werden. Dabei müssen sowohl die Medium-Zuführkanäle und Medium-Abführkanäle als auch die Strömungsfelder abgedichtet werden, um sowohl Leckagen in den Außenraum der elektrochemischen Vorrichtung als auch zwischen den Räumen, welche von den verschiedenen Medien durchströmt werden, zu verhindern.

Die durch die elektrochemische Vorrichtung geführten Medien dürfen sich weder miteinander vermischen noch aus den elektrochemischen Einheiten austreten, weshalb in mehreren Ebenen Dichtungen erforderlich sind.

Diese Dichtungen können beispielsweise auf der Basis von Elastomermaterialien realisiert werden.

In elektrochemischen Einheiten mit metallischen Bipolarplatten können die Dichtungen vollständig oder teilweise durch Sicken in der Bipolarplatte oder durch Dichtungen auf der Basis von Elastomermaterialien verwirklicht sein.

Die Bipolarplatten (auch Separatoren oder Interkonnektoren genannt) können einteilig ausgebildet sein oder mindestens zwei Einzellagen (Bipolarplattenlagen) umfassen.

Die Bipolarplattenlagen einer mehrlagigen Bipolarplatte können durch Fügeverfahren wie Schweißen oder Kleben miteinander verbunden werden.

Eine Dichtung kann als separate Komponente in den Stapel aus elektrochemischen Einheiten eingelegt oder an einer Bipolarplatte oder an einem anderen Bestandteil einer elektrochemischen Einheit, beispielsweise an einer Gasdiffusionslage, festgelegt sein.

Wenn ein Dichtelement direkt an eine Gasdiffusionslage angebunden wird, wird ein fließender Übergang zwischen der Dichtung und der Gasdiffusionslage geschaffen.

Eine zwischen zwei Baugruppen aus jeweils einer Gasdiffusionslage und einem Dichtelement verpresste Membran erfährt keine übermäßigen Spannungsspitzen.

Ein Zellaufbau mit Baugruppen aus jeweils einer Gasdiffusionslage und einem Dichtelement kann im Vergleich zu einer Dichtungslösung mit einer Randverstärkungsanordnung sehr kompakt aufgebaut werden, da kein zusätzlicher Platz für die Überlappung zwischen der Randverstärkungsanordnung und der Membran-Elektroden-Anordnung vorgesehen werden muss.

Die Anbindung des Dichtelements an die Gasdiffusionslage kann beispielsweise in einem Spritzgießprozess erfolgen. Dabei wird eine Gasdiffusionslage in ein (vorzugsweise mehrteiliges) Spritzgießwerkzeug eingelegt und an ihrem äußeren Umfang mit einem Dichtungsmaterial oder Spritzgießmaterial umspritzt.

Hierbei entsteht ein Durchdringungsbereich am Übergang zwischen der Gasdiffusionslage und dem Dichtelement, in welchem das Spritzgießmaterial einen Teil der porösen Gasdiffusionslage durchdringt.

Dieser Durchdringungsbereich schafft eine stoffschlüssige und/oder formschlüssige Verbindung zwischen der Gasdiffusionslage und dem Dichtelement, so dass die Gasdiffusionslage und das Dichtelement während der nachfolgenden Montageschritte und während des Betriebs der elektrochemischen Vorrichtung mechanisch ausreichend gut miteinander verbunden sind.

Im Durchdringungsbereich sind die Poren der Gasdiffusionslage mit dem Spritzgießmaterial, welches nach dem Aushärten das Dichtungsmaterial bildet, verfüllt, so dass in diesem Bereich der Transport eines kathodischen Fluids oder eines anodischen Fluids zum elektrochemisch aktiven Bereich der elektrochemischen Einheit erschwert wird. Der Durchdringungsbereich soll daher einen möglichst geringen Teil der Gasdiffusionslage umfassen, dabei jedoch ausreichend groß sein, um eine stabile mechanische Anbindung zwischen der Gasdiffusionslage und dem Dichtelement zu gewährleisten.

Um den Durchdringungsbereich auf der Gasdiffusionslagenseite zu begrenzen, wird die Gasdiffusionslage, die in ihrer Dickenrichtung (parallel zur Stapelrichtung der elektrochemischen Vorrichtung) mechanisch kompressibel ist, im Spritzgießwerkzeug lokal mittels einer Abdrückkante verpresst. Hierdurch steigt der Kapillardruck in den Poren der Gasdiffusionslage lokal an, und die Durchdringung der Gasdiffusionslage mit dem Spritzgießmaterial wird in den zur Dickenrichtung (z-Richtung) senkrechten x- und y-Richtungen begrenzt.

Die Abdrückkante muss die Gasdiffusionslage mit einem Mindestdruck verpressen, um die Durchdringung der Gasdiffusionslage mit dem Spritzgießmaterial zu begrenzen. Allerdings darf die lokale Verpressung der Gasdiffusionslage durch die Abdrückkante auch nicht zu hoch sein, da die Gasdiffusionslage bei übermäßiger Verpressung beschädigt werden kann, beispielsweise durch Faserbruch.

Das Maß der Durchdringung der Gasdiffusionslage mit dem Spritzgießmaterial ist abhängig vom lokal, im jeweiligen Bereich der Gasdiffusionslage, anliegenden Druck der Spritzgießmasse im Spritzgießwerkzeug. Außerdem hängt der Grad der Durchdringung der Gasdiffusionslage mit dem Spritzgießmaterial von der Viskosität des Spritzgießmaterials, von der Temperatur des Spritzgießwerkzeugs (welche unter anderem die Viskosität des Spritzgießmaterials beeinflusst) und von den Eigenschaften der Gasdiffusionslage im Bereich der Abdrückkante und im restlichen Bereich der Gasdiffusionslage ab, insbesondere von der Porosität, von der Tortuosität (das heißt vom Grad der Gewundenheit der Transportwege innerhalb der Gasdiffusionslage), vom Kapillardruck und von der Hydrophobierung.

Bei der Anbindung eines Dichtelements an eine Gasdiffusionslage in einem Spritzgießprozess oder einem ähnlichen Verfahren wird Spritzgießmaterial an einem Einspritzpunkt oder an mehreren Einspritzpunkten in die Kavität des Spritzgießwerkzeugs eingeleitet und breitet sich dann entlang von Fließwegen unter Ausbildung einer Fließfront in der Kavität aus.

Die Erzeugung des Dichtelements an der jeweiligen Gasdiffusionslage erfolgt vorzugsweise in einem Spritzgießwerkzeug bei einer Temperatur, welche üblicherweise höher als 100°C und niedriger als 200°C ist.

Nach dem Spritzgießvorgang und einer Heizzeit zur Vernetzung des eingespritzten Dichtungsmaterials, insbesondere eines Elastomermaterials, wird das Spritzgießwerkzeug geöffnet und die Baugruppe aus der Gasdiffusionslage und dem am äußeren Rand der Gasdiffusionslage angespritzten Dichtelement aus dem Spritzgießwerkzeug entnommen.

Bei bekannten Verfahren zum Herstellen von elektrochemisch aktiven Einheiten, welche eine Membran und mindestens eine Baugruppe in Form einer Gasdiffusionslage-Dichtelement-Einheit umfassen, werden die Gasdiffusionslage-Dichtelement-Einheiten in Einzelteil-Prozessen hergestellt und weiterverarbeitet.

Hierbei treten die folgenden Nachteile auf:
- Bei der Fertigung einer Gasdiffusionslage-Dichtelement-Einheit in einem Spritzgießwerkzeug kann eine starke Haftung zwischen dem Dichtungsmaterial des Dichtelements einerseits und den Begrenzungswänden der Spritzgießwerkzeug-Kavität andererseits entstehen. Die Entformung des Dichtelements ohne eine Beschädigung desselben erfordert dann einen erhöhten Aufwand (beispielsweise eine Beschichtung des Spritzgießwerkzeugs zur Reduktion der Haftung, Greifersysteme oder Auswerfersysteme), zumal die Gasdiffusionslage und das Dichtelement sehr leicht beschädigt werden können.
- Die Handhabung der Gasdiffusionslage-Dichtelement-Einheit erfordert einen erhöhten Aufwand aufgrund der mechanischen Instabilität dieser Baugruppe. Insbesondere die Außenbereiche des Dichtelements sind sehr instabil, wodurch keine in Form und Lage reproduzierbare Ablage der Baugruppe in einer Prozessvorrichtung gewährleistet ist.
- Die Gasdiffusionslage-Dichtelement-Einheit kann nicht in Form und Lage reproduzierbar in Trägersystemen, welche zur Verarbeitung in einem Einzelteil-Prozess dienen, abgelegt werden. Bei jedem Prozess, bei dem die Lage der Baugruppe genau bestimmt sein muss, ist daher zusätzlich eine aufwändige Vermessung oder Einmessung der Baugruppe erforderlich.
- Die Vermessung der Gasdiffusionslage-Dichtelement-Einheit ist durch die nichtreproduzierbare Ablageposition dieser Baugruppe erschwert.
- Die Assemblierung der elektrochemisch aktiven Einheit (auch als Membran-Elektroden-Anordnung (MEA) bezeichnet), welche eine (beispielsweise katalysatorbeschichtete) Membran und vorzugsweise zwei Gasdiffusionslage-Dichtelement-Einheiten umfasst, ist ein aufwändiger Einzelteil-Prozess, da jede einzelne Gasdiffusionslage-Dichtelement-Einheit aufgenommen, vermessen und (beispielsweise mit Linearrobotern oder Ähnlichem) positioniert werden muss. Ferner muss jede Gasdiffusionslage-Dichtelement-Einheit in die für die Assemblierung der elektrochemisch aktiven Einheit erforderliche Form und Lage gebracht werden. Die für eine Assemblierung mit solchen Systemen benötigte Prozesszeit ist sehr lang.
- Dichtungsmaterialien können eine sehr starke Haftungsneigung zueinander und zu anderen Materialien, beispielsweise einer Prozessvorrichtung, aufweisen. Die Vereinzelung der Gasdiffusionslage-Dichtelement-Einheiten und die Aufnahme derselben aus Prozessvorrichtungen kann durch die Anhaftung erschwert werden.

Die US 2008/142152 A1 offenbart ein Verfahren zum Herstellen einer elektrochemisch aktiven Einheit gemäß dem Oberbegriff von Anspruch 1.

Die DE 10 2011 052562 A1 offenbart ein Verfahren zum Herstellen einer elektrochemisch aktiven Einheit, bei dem eine Gasdiffusionslage mit einer Membran verbunden wird, bevor Dichtelemente an einer Trägerfolie erzeugt werden.

Die US 2007/003821 A1 offenbart ein Verfahren zum Herstellen einer elektrochemisch aktiven Einheit, bei dem ein Dichtelement an einer Baugruppe erzeugt wird, welche bereits eine Membran und Gasdiffusionsschichten umfasst.

Die DE 10 2007 030343 A1 offenbart ein Verfahren zum Herstellen einer elektrochemisch aktiven Einheit, bei dem Dichtelemente an einem Substrat erzeugt werden und Verschlusselemente zum Verriegeln von Gasdiffusionsschichten in einer Stellung, in welcher eine Membran zwischen den Gasdiffusionsschichten eingelegt ist, aufweisen.

Die US 2006/090317 A1 offenbart ein Verfahren zum Herstellen einer elektrochemisch aktiven Einheit, bei dem ein Dichtelement an einer Gasdiffusionslage erzeugt wird, bevor das Dichtelement mit einem Trägerelement verbunden wird.

Die DE 10 2016 205043 A1 offenbart ein Verfahren zum Herstellen einer elektrochemisch aktiven Einheit, bei dem ein Dichtelement an eine Kante einer Membran-Elektroden-Anordnung, welche bereits eine Membran enthält, angeformt wird.

Der vorliegenden Erfindung liegt die Aufgabe zugrunde, ein Verfahren zum Herstellen einer elektrochemisch aktiven Einheit der eingangs genannten Art zu schaffen, welches mit geringem Aufwand an Prozessvorrichtungen und Prozesszeit prozesssicher durchführbar ist.

Diese Aufgabe wird erfindungsgemäß durch ein Verfahren zum Herstellen einer solchen elektrochemisch aktiven Einheit nach Anspruch 1 gelöst.

Der erfindungsgemäßen Lösung liegt das Konzept zugrunde, die Baugruppe (Gasdiffusionslage-Dichtelement-Einheit) an ihrem äußeren Umfang zumindest bereichsweise an ein Trägerelement anzubinden, welches es zulässt, die Baugruppe im Folgenden in Rollenprozessen oder beispielsweise als Leporello zu verarbeiten.

Insbesondere die Entformung der Baugruppe aus einem Spritzgießwerkzeug, mittels welchem das Dichtelement an der Gasdiffusionslage erzeugt wird, kann dadurch deutlich vereinfacht werden, da über das Trägerelement eine Entformungskraft auf das Dichtelement ausgeübt werden kann.

In weiteren Prozessschritten, insbesondere beim Assemblieren der elektrochemisch aktiven Einheit (welche mindestens eine Gasdiffusionslage-Dichtelement-Einheit und eine Membran umfasst), kann die Verarbeitung der Gasdiffusionslage-Dichtelement-Einheiten direkt von dem Trägerelement erfolgen, welches beispielsweise zu einer Rolle aufgewickelt sein kann.

Wenn an dem Trägerelement Positionierelemente vorgesehen sind, kann eine sehr hohe Positionsgenauigkeit der Gasdiffusionslage-Dichtelement-Einheiten beim Assembliervorgang gewährleistet werden, ohne dass hierfür aufwändige Positions-Erkennungs-Systeme benötigt werden.

Die Verarbeitungsgeschwindigkeit in einem Prozess, bei welchem die Gasdiffusionslage-Dichtelement-Einheiten an dem Trägerelement angeordnet sind, kann sehr hoch gewählt werden im Vergleich zu Einzelteil-Prozessen, insbesondere dann, wenn die Gasdiffusionslage-Dichtelement-Einheiten von einer Trägerelement-Rolle aus verarbeitet werden.

Die Gasdiffusionslage-Dichtelement-Einheit kann mithilfe des Trägerelements in einem Bearbeitungsvorgang, beispielsweise in einem Beschichtungsvorgang, positioniert und/oder gehalten werden.

In einem solchen Beschichtungsvorgang kann beispielsweise eine Katalysatorschicht und/oder eine Ionomerschicht ganz oder teilweise auf die Gasdiffusionslage-Dichtelement-Einheit aufgetragen werden.

Der Verbund aus einer oder mehreren Gasdiffusionslage-Dichtelement-Einheiten und einem Trägerelement kann auf einer Rolle aufgewickelt werden. Hierdurch werden sowohl die Lagerung der Gasdiffusionslage-Dichtelement-Einheiten als auch die Positionierung und/oder die positionsgenaue Aufnahme der Gasdiffusionslage-Dichtelement-Einheiten in weiteren Prozessschritten vereinfacht.

Bei der Lagerung des Verbunds aus einer oder mehreren Gasdiffusionslage-Dichtelement-Einheiten und dem Trägerelement in Form einer Rolle können eine oder mehrere Zwischenlagen vorgesehen sein, die zwischen Lagen des Trägerelements eingelegt werden. So kann insbesondere ein Anhaften der Gasdiffusionslage-Dichtelement-Einheiten oder des Trägerelements und/oder eine Beschädigung der Gasdiffusionslage-Dichtelement-Einheiten oder des Trägerelements vermieden werden.

Bei dem erfindungsgemäßen Verfahren zum Herstellen einer elektrochemisch aktiven Einheit kann vorgesehen sein, dass die Gasdiffusionslage der Baugruppe, welche eine Gasdiffusionslage und ein an der Gasdiffusionslage erzeugtes Dichtelement umfasst, schon vor dem Erzeugen des Dichtelements mit dem Trägerelement verbunden wird.

Das Dichtelement wird bei seiner Erzeugung mit dem Trägerelement verbunden.

Das Dichtelement wird durch einen Spritzgießvorgang, durch einen Siebdruckvorgang oder durch einen Dispenserauftragsvorgang erzeugt.

Bei einer besonderen Ausgestaltung der Erfindung ist vorgesehen, dass das Dichtelement längs seines gesamten Umfangs mit dem Trägerelement in Kontakt steht.

Alternativ hierzu kann vorgesehen sein, dass das Dichtelement an einer Mehrzahl von längs einer Umfangsrichtung des Dichtelements voneinander beabstandeten Kontaktbereichen mit dem Trägerelement in Kontakt steht.

Das Trägerelement kann eine Folie und/oder ein Band umfassen.

Insbesondere kann vorgesehen sein, dass das Trägerelement als eine Folie und/oder als ein Band ausgebildet ist.

Die Materialstärke des Trägerelements beträgt vorzugsweise weniger als 1 mm, insbesondere weniger als 0,4 mm, besonders bevorzugt weniger als 0,1 mm.

Grundsätzlich kann vorgesehen sein, dass nur ein Dichtelement und/oder nur eine Gasdiffusionslage mit dem Trägerelement verbunden wird. Vorzugsweise ist jedoch vorgesehen, dass eine Mehrzahl von Dichtelementen und/oder eine Mehrzahl von Gasdiffusionslagen mit demselben Trägerelement verbunden werden.

Das Trägerelement mit dem daran angeordneten mindestens einen Dichtelement und/oder der daran angeordneten mindestens einen Gasdiffusionslage kann, insbesondere für Zwecke der Lagerung, des Transports oder der Verwendung in einem Prozess, welcher als ein Rollenprozess ausgebildet ist, aufgewickelt werden.

Beim Aufwickeln des Trägerelements kann mindestens ein Zwischenelement zwischen aufeinanderfolgende Wickellagen des Trägerelements eingebracht werden, um ein Anhaften der aufeinanderfolgenden Wickellagen des Trägerelements aneinander und/oder eine Beschädigung der Wickellagen des Trägerelements zu vermeiden.

Bei einer besonderen Ausgestaltung des Verfahrens ist vorgesehen, dass mindestens ein an dem Trägerelement angeordnetes Dichtelement und/oder mindestens eine an dem Trägerelement angeordnete Gasdiffusionslage mit einem Beschichtungsmaterial beschichtet wird.

Ein solches Beschichtungsmaterial kann insbesondere ein Katalysatormaterial oder ein Membranmaterial, beispielsweise ein Ionomer-Material, sein.

Das Assemblieren der Membran und der mindestens einen Baugruppe, welche eine Gasdiffusionslage und ein Dichtelement umfasst, erfolgt vorzugsweise in einem Rollenprozess, in welchem die mindestens eine an dem Trägerelement angeordnete Baugruppe und die an einem Membran-Trägerelement angeordnete Membran zusammengeführt werden.

Um das Trägerelement mit der daran angeordneten Baugruppe aus Gasdiffusionslage und Dichtelement oder auch das Trägerelement vor dem Anordnen der Gasdiffusionslage und/oder des Dichtelements an dem Trägerelement positionieren oder bewegen zu können oder um das Trägerelement mit der Gasdiffusionslage und/oder mit dem Dichtelement verbinden zu können, ist vorgesehen, dass das Trägerelement mit mindestens einem Positionierelement und/oder mit mindestens einem Halteelement versehen ist.

Bei einer besonderen Ausgestaltung der Erfindung ist vorgesehen, dass ein mit dem Dichtelement und/oder mit der Gasdiffusionslage verbundener Trägerelement-Kernbereich aus dem Trägerelement herausgetrennt wird.

Das Heraustrennen des Trägerelement-Kernbereichs aus dem Trägerelement kann beispielsweise durch Stanzen, Schneiden, Rollschneiden, Laserschneiden oder Wasserstrahlschneiden erfolgen.

Insbesondere kann vorgesehen sein, dass das Trägerelement eine Sollbruchstelle und/oder eine Perforation aufweist, längs welcher der mit dem Dichtelement und/oder mit der Gasdiffusionslage verbundene Trägerelement-Kernbereich aus dem Trägerelement herausgetrennt werden kann.

Alternativ oder ergänzend hierzu kann ein Abtrennen eines Dichtelement-Kernbereichs von dem Trägerelement auch dadurch erfolgen, dass das Dichtelement eine Sollbruchstelle aufweist, längs welcher der Dichtelement-Kernbereich von einem Dichtelement-Außenbereich abgetrennt wird. Dabei ist vorzugsweise der Dichtelement-Außenbereich mit dem Trägerelement verbunden.

Die vorliegende Erfindung betrifft ferner ein Trägerelement für eine Baugruppe, welche eine Gasdiffusionslage und ein an der Gasdiffusionslage erzeugtes Dichtelement umfasst.

Der vorliegenden Erfindung liegt die weitere Aufgabe zugrunde, eine Möglichkeit zu schaffen, eine solche Baugruppe mit geringem Aufwand an Prozessvorrichtungen und Prozesszeit prozesssicher zu positionieren.

Diese Aufgabe wird erfindungsgemäß durch ein Trägerelement nach Anspruch 12 gelöst.

Besondere Ausgestaltungen des erfindungsgemäßen Trägerelements sind bereits vorstehend im Zusammenhang mit besonderen Ausgestaltungen des erfindungsgemäßen Verfahrens zum Herstellen einer elektrochemisch aktiven Einheit, die eine Membran und mindestens eine Baugruppe, welche eine Gasdiffusionslage und ein an der Gasdiffusionslage erzeugtes Dichtelement umfasst, umfasst, erläutert worden.

Das erfindungsgemäße Trägerelement eignet sich insbesondere zur Verwendung in dem erfindungsgemäßen Verfahren zum Herstellen einer elektrochemisch aktiven Einheit.

Die elektrochemisch aktive Einheit bildet vorzugsweise einen Bestandteil einer elektrochemischen Vorrichtung, welche beispielsweise als eine Brennstoffzellenvorrichtung oder ein Elektrolyseur ausgebildet ist.

Wenn die elektrochemische Vorrichtung als eine Brennstoffzellenvorrichtung ausgebildet ist, so ist sie vorzugsweise eine Polymerelektrolyt-Membran-Brennstoffzellenvorrichtung.

Gemäß der Erfindung wird mindestens eine der beiden Gasdiffusionslage-Dichtelement-Einheiten einer elektrochemisch aktiven Einheit, vorzugsweise während des Herstellungsprozesses des Dichtelements, an das Trägerelement angebunden.

Das Trägerelement kann eine Folie mit Aussparungen sein, in denen jeweils eine Gasdiffusionslage-Dichtelement-Einheit fixiert wird.

Mehrere Gasdiffusionslage-Dichtelement-Einheiten können hintereinander an einem bandförmigen Trägerelement fixiert werden, so dass ein Trägerelement mit aufeinanderfolgenden Gasdiffusionslage-Dichtelement-Einheiten entsteht.

Jede Gasdiffusionslage-Dichtelement-Einheit kann über ihren Umfang vollständig oder nur partiell an das Trägerelement angebunden sein.

Das Trägerelement kann nur mit dem Dichtelement der Gasdiffusionslage-Dichtelement-Einheit in Kontakt stehen.

Alternativ hierzu kann das Trägerelement sowohl mit dem Dichtelement als auch mit der Gasdiffusionslage der Gasdiffusionslage-Dichtelement-Einheit in Kontakt stehen.

An dem Trägerelement können Positionierelemente vorgesehen sein, welche der Positionierung des Trägerelements während des Herstellungsvorgangs der Gasdiffusionslage-Dichtelement-Einheit dienen.

Diese Positionierelemente können auch in nachfolgenden Prozessschritten verwendet werden, um das Trägerelement und damit die Gasdiffusionslage-Dichtelement-Einheit zu positionieren und/oder zu bewegen.

Das Trägerelement kann auf eine Rolle aufgewickelt werden.

Dabei können ein oder mehrere Zwischenelemente zwischen die Wickellagen des Trägerelements (mit den daran angeordneten Gasdiffusionslage-Dichtelement-Einheiten) eingebracht werden.

Die Gasdiffusionslage kann bereits vor dem Herstellvorgang des Dichtelements an dem Trägerelement angeordnet werden. Dies kann beispielsweise in einem Rollenprozess geschehen. Dadurch kann die Gasdiffusionslage beispielsweise mithilfe von an dem Trägerelement angeordneten Positionierelementen für den Herstellvorgang des Dichtelements positioniert werden.

Die Gasdiffusionslage kann vor der Erzeugung des Dichtelements über ihren Umfang umlaufend oder lokal oder partiell, an mehreren längs der Umfangsrichtung der Gasdiffusionslage aufeinanderfolgenden und in der Umfangsrichtung der Gasdiffusionslage voneinander beabstandeten Kontaktbereichen, an das Trägerelement angebunden sein.

Die Verbindung zwischen dem Dichtelement und/oder der Gasdiffusionslage einerseits und dem Trägerelement andererseits kann so gestaltet sein, dass eine einfache Lösung der Verbindung in einem nachfolgenden Prozessschritt, beispielsweise in einem Prozessschritt zur Assemblierung der elektrochemisch aktiven Einheit und/oder zur Montage der Gasdiffusionslage-Dichtelement-Einheit, möglich ist.

Das Trägerelement kann mit einer Perforation versehen sein.

Das Trägerelement kann zumindest partiell in einem dem Dichtelement zugewandten Randbereich des Trägerelements mit einem Falz versehen sein.

Der Falz kann so ausgebildet sein, dass er durch Aufbringung einer Kraft leicht von dem Dichtelement lösbar ist.

Das Trägerelement kann vor oder während der Assemblierung der elektrochemisch aktiven Einheit (Membran-Elektroden-Anordnung) und/oder vor oder während der Montage eines Stapels aus elektrochemisch aktiven Einheiten vollständig von der Gasdiffusionslage-Dichtelement-Einheit entfernt werden oder partiell an der Gasdiffusionslage-Dichtelement-Einheit verbleiben.

Es kann auch vorgesehen sein, dass das Trägerelement in mehreren Trennungsschritten jeweils teilweise von der Gasdiffusionslage-Dichtelement-Einheit abgelöst wird.

Das Trägerelement kann mit einem oder mehreren Positionierelementen versehen sein, welche beispielsweise bei der Assemblierung der elektrochemisch aktiven Einheit und/oder bei der Montage eines Stapels aus elektrochemisch aktiven Einheiten dazu genutzt werden können, die Gasdiffusionslage-Dichtelement-Einheit zu positionieren.

Ein solches Positionierelement kann beispielsweise durch einen Trennvorgang, insbesondere durch Stanzen, Schneiden oder Ähnliches, an dem Trägerelement erzeugt werden.

Alternativ oder ergänzend hierzu kann ein zusätzliches Element an dem Trägerelement angebracht werden, welches eine Positionierung ermöglicht.

Das mindestens eine Positionierelement kann so ausgebildet sein, dass es die Positioniertoleranz verringert.

Insbesondere kann das mindestens eine Positionierelement eine hohe Steifigkeit aufweisen.

Die an dem Trägerelement angeordnete Gasdiffusionslage-Dichtelement-Einheit kann in einem Beschichtungsvorgang mit einem Beschichtungsmaterial, beispielsweise mit einem Katalysatormaterial, einem Membranmaterial oder einem Ionomer-Material, beschichtet werden.

Bei einem solchen Beschichtungsvorgang kann mindestens ein Positionierelement, das an dem Trägerelement angeordnet ist, zur Positionierung der Gasdiffusionslage-Dichtelement-Einheit relativ zu einer Beschichtungsvorrichtung und damit zur Erzielung einer positionsgenauen Beschichtung verwendet werden.

Für die Beschichtung der Gasdiffusionslage-Dichtelement-Einheit kann vorzugsweise ein rollengestützter Prozess verwendet werden.

Für die Assemblierung von mehreren, beispielsweise zwei, Gasdiffusionslage-Dichtelement-Einheiten und einer (beispielsweise katalysatorbeschichteten) Membran (CCM) zu einer elektrochemisch aktiven Einheit, insbesondere einer Membran-Elektroden-Anordnung (MEA), können die Gasdiffusionslage-Dichtelement-Einheiten, welche jeweils mit einem Trägerelement verbunden sind, und eine an einem Membran-Trägerelement angeordnete Membran in einem oder mehreren Rollenprozessen miteinander verbunden werden.

Eine rollengestützte Verarbeitung ermöglicht eine sehr genaue Positionierung der Einzelkomponenten der elektrochemisch aktiven Einheit relativ zueinander und/oder eine sehr hohe Prozessgeschwindigkeit.

Ferner kann vorgesehen sein, dass zunächst das Dichtelement an das Trägerelement angebunden wird und die Gasdiffusionslage der Gasdiffusionslage-Dichtelement-Einheit danach, in einem weiteren Schritt, an dem Trägerelement und/oder an dem Dichtelement angeordnet wird, beispielsweise in die Dichtelement-Trägerelement-Einheit eingelegt wird.

Die Verbindung zwischen der Gasdiffusionslage und dem Dichtelement kann hierbei beispielsweise durch Formschluss hergestellt werden.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine ausschnittsweise Draufsicht auf ein bandförmiges Trägerelement, an dem eine Mehrzahl von Gasdiffusionslage-Dichtelement-Einheiten angeordnet sind;
- Fig. 2: eine vergrößerte Darstellung einer der Gasdiffusionslage-Dichtelement-Einheiten aus Fig. 1, welche zeigt, dass das Dichtelement der Gasdiffusionslage-Dichtelement-Einheit längs seines gesamten Umfangs mit dem Trägerelement in Kontakt steht;
- Fig. 3: einen ausschnittsweisen Schnitt durch eine Gasdiffusionslage, welche mit einem Trägerelement verbunden ist;
- Fig. 4: einen ausschnittsweisen Schnitt durch eine Gasdiffusionslage-Dichtelement-Einheit, deren Gasdiffusionslage und deren Dichtelement mit einem Trägerelement verbunden sind;
- Fig. 5: eine schematische perspektivische Darstellung einer Trägerelement-Gasdiffusionslage-Dichtelement-Einheiten-Rolle, zu welcher das bandförmige Trägerelement aus Fig. 1, welches eine Mehrzahl von Gasdiffusionslage-Dichtelement-Einheiten trägt, aufwickelbar ist;
- Fig. 6: einen ausschnittsweisen Schnitt durch ein Trägerelement mit einer daran angeordneten Gasdiffusionslage-Dichtelement-Einheit, wobei die Gasdiffusionslage-Dichtelement-Einheit mit einem Beschichtungsmaterial, beispielsweise mit einem Katalysatormaterial und/oder mit einem Ionomer/Membran-Material, beschichtet wird;

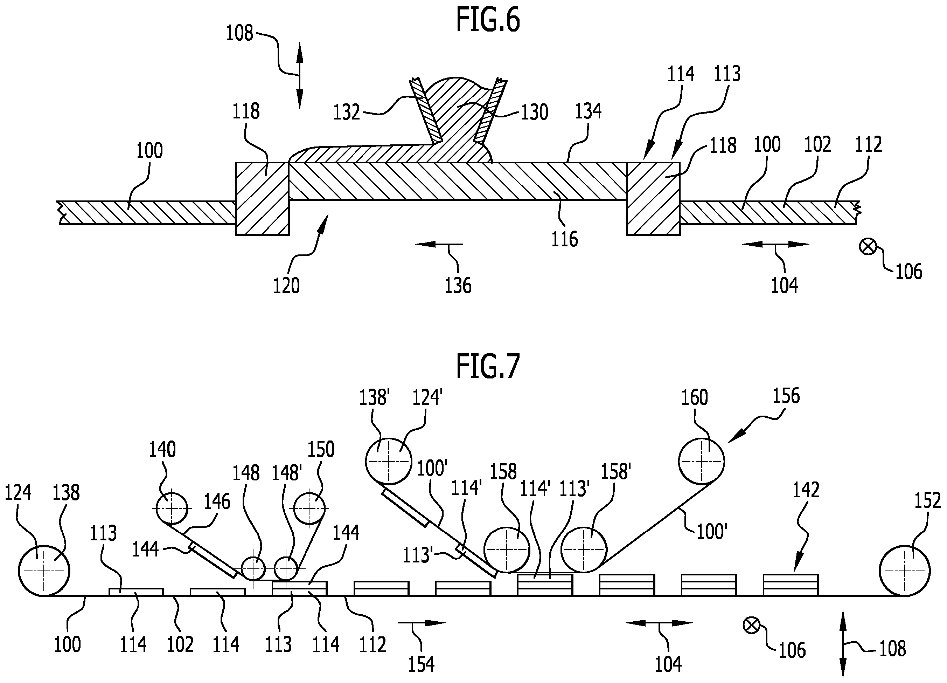

- Fig. 7: eine schematische Darstellung eines Assembliervorgangs, bei welchem in einem Rollenprozess erste Gasdiffusionslage-Dichtelement-Einheiten, die an einem ersten bandförmigen Trägerelement angeordnet sind, mit (beispielsweise katalysatorbeschichteten) Membranen, die an einem Membran-Trägerelement angeordnet sind, verbunden werden und anschließend die Membranen mit zweiten Gasdiffusionslage-Dichtelement-Einheiten, die an einem zweiten bandförmigen Trägerelement angeordnet sind, verbunden werden, um so elektrochemisch aktive Einheiten zu assemblieren, welche jeweils zwei Gasdiffusionslage-Dichtelement-Einheiten und eine dazwischen angeordnete Membran umfassen;
- Fig. 8: eine ausschnittsweise Draufsicht auf ein Trägerelement, an dem eine Gasdiffusionslage-Dichtelement-Einheit angeordnet ist, wobei das Dichtelement an einer Mehrzahl von längs einer Umfangsrichtung des Dichtelements voneinander beabstandeten Kontaktbereichen mit dem Trägerelement in Kontakt steht;
- Fig. 9: eine ausschnittsweise Draufsicht auf ein Trägerelement, an welchem mindestens ein Positionierelement angeordnet ist, welches der Positionierung des Trägerelements, der Gasdiffusionslage-Dichtelement-Einheit und/oder der Gasdiffusionslage während des Herstellungsvorgangs des Dichtelements und/oder in der Herstellung des Dichtelements nachgelagerten Prozessen, beispielsweise bei einem Beschichtungsvorgang oder bei der Assemblierung der elektrochemisch aktiven Einheit unter Verwendung der Gasdiffusionslage-Dichtelement-Einheit, dienen kann;
- Fig. 10: eine ausschnittsweise Draufsicht auf ein Trägerelement, an dem eine Gasdiffusionslage-Dichtelement-Einheit angeordnet ist, wobei ein Trägerelement-Kernbereich längs einer Trennlinie aus dem Trägerelement heraustrennbar ist und an dem Trägerelement-Kernbereich mindestens ein Positionierelement zur Verwendung in einem vor oder nach der Heraustrennung des Trägerelement-Kernbereichs erfolgenden Prozessschritt angeordnet ist;
- Fig. 11: eine ausschnittsweise Draufsicht auf ein Trägerelement mit einer daran angeordneten Gasdiffusionslage-Dichtelement-Einheit, wobei ein Trägerelement-Kernbereich längs einer Trennlinie aus dem Trägerelement heraustrennbar ist und mindestens ein Positionierelement außerhalb des heraustrennbaren Trägerelement-Kernbereichs an dem Trägerelement angeordnet ist, um in einem vor dem Heraustrennen des Trägerelement-Kernbereichs erfolgenden Prozessschritt zur Positionierung des Trägerelements, der Gasdiffusionslage-Dichtelement-Einheit und/oder der Gasdiffusionslage zu dienen;
- Fig. 12: eine perspektivische Darstellung einer Trägerelement-Gasdiffusionslage-Dichtelement-Einheiten-Rolle, welche durch Aufwickeln eines bandförmigen Trägerelements, an welchem eine Mehrzahl von Gasdiffusionslage-Dichtelement-Einheiten angeordnet sind, erzeugbar ist, wobei zusammen mit dem bandförmigen Trägerelement ein bandförmiges Zwischenelement aufgewickelt wird, so dass in der Wicklung in radialer Richtung aufeinanderfolgende Lagen des Trägerelements und der Gasdiffusionslage-Dichtelement-Einheiten durch jeweils eine Lage des Zwischenelements voneinander getrennt sind;
- Fig. 13: einen ausschnittsweisen Schnitt durch ein Dichtelement, das mit einem Trägerelement verbunden ist;
- Fig. 14: einen ausschnittsweisen Schnitt durch ein Dichtelement, das mit einem Trägerelement verbunden ist, wobei das Trägerelement einen auf das Trägerelement zurückgebogenen Falzabschnitt aufweist;
- Fig. 15: einen ausschnittsweisen Schnitt durch ein Dichtelement, das mit einem Trägerelement verbunden ist, wobei das Trägerelement einen gekrümmten Falzabschnitt aufweist;
- Fig. 16: einen ausschnittsweisen Schnitt durch ein Dichtelement, das mit einem Trägerelement verbunden ist, wobei das Trägerelement einen abgekanteten Falzabschnitt aufweist;
- Fig. 17: einen ausschnittsweisen Schnitt durch ein Dichtelement, das mit einem Trägerelement verbunden ist, wobei das Trägerelement mit einem Halteelement zur Erleichterung der Anbindung des Dichtelements an das Trägerelement versehen ist;
- Fig. 18: einen ausschnittsweisen Schnitt durch ein Dichtelement, das mit einem Trägerelement verbunden ist, wobei das Dichtelement in einem dem Trägerelement zugewandten Randbereich desselben mit einer Sollbruchstelle versehen ist;
- Fig. 19: einen ausschnittsweisen Schnitt durch ein Dichtelement, das mit einem Trägerelement verbunden ist, wobei das Trägerelement in einem dem Dichtelement zugewandten Randbereich desselben mit einer Sollbruchstelle versehen ist;
- Fig. 20: eine ausschnittsweise Draufsicht auf ein Trägerelement, an dem eine Gasdiffusionslage-Dichtelement-Einheit angeordnet ist, wobei das Trägerelement eine Perforation aufweist, längs welcher ein Trägerelement-Kernbereich, an welchem die Gasdiffusionslage-Dichtelement-Einheit angeordnet ist, aus dem Trägerelement herauslösbar ist; und
- Fig. 21: eine ausschnittsweise Draufsicht auf ein Trägerelement, an dem eine Gasdiffusionslage-Dichtelement-Einheit angeordnet ist, wobei das Dichtelement der Gasdiffusionslage-Dichtelement-Einheit nur in einem Außenbereich des Dichtelements mit dem Trägerelement verbunden ist und wobei das Dichtelement Medium-Durchtrittsöffnungen aufweist und das Trägerelement die Medium-Durchtrittsöffnungen nicht überlappt.

Gleiche oder funktional äquivalente Elemente sind in allen Figuren mit denselben Bezugszeichen bezeichnet.

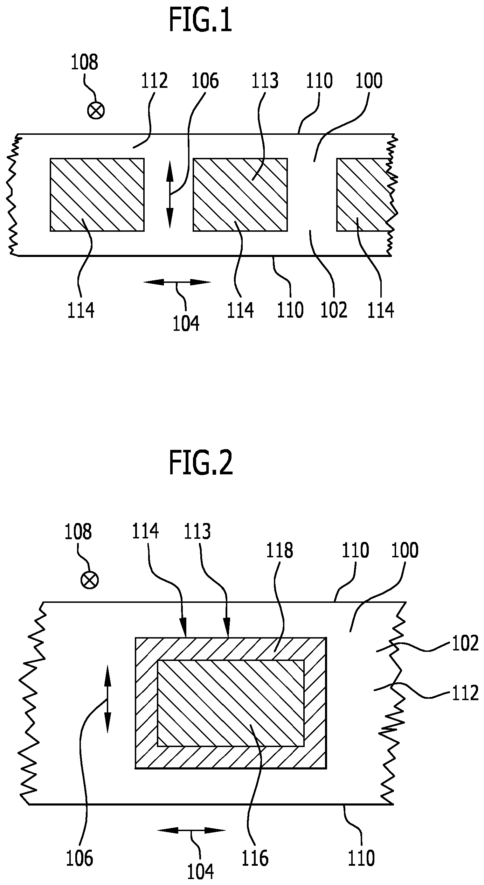

Ein in Fig. 1 dargestelltes Trägerelement 100 weist die Form eines Bandes 102 auf, welches sich in einer Längsrichtung 104 erstreckt und in einer senkrecht zur Längsrichtung 104 und senkrecht zu einer Dickenrichtung 108 des Trägerelements ausgerichteten Querrichtung 106 durch zwei im Wesentlichen parallel zur Längsrichtung 104 des Trägerelements 100 verlaufende Ränder 110 begrenzt ist.

Das Trägerelement 100 umfasst beispielsweise eine Folie mit einer geringen Dicke von beispielsweise weniger als 1 mm, vorzugsweise weniger als 0,5 mm.

Das Trägerelement kann beispielsweise ein Polytetrafluorethylen, ein Polyvinylidenfluorid, ein Polyester, ein Polyamid, ein Copolyamid, ein Polyamid-Elastomer, ein Polyimid, ein Polyurethan, ein Polyurethan-Elastomer, ein Silikon, einen Silikonkautschuk und/oder ein Silikon-basiertes Elastomer umfassen und insbesondere im Wesentlichen vollständig aus einem oder mehreren dieser Materialien gebildet sein.

An dem Trägerelement 100 sind vorzugsweise mehrere als Gasdiffusionslage(GDL)-Dichtelement-Einheiten 114 ausgebildete Baugruppen 113 angeordnet, welche in der Längsrichtung 104 des Trägerelements 100 voneinander beabstandet sind.

Vorzugsweise sind die Gasdiffusionslage-Dichtelement-Einheiten 114 auch von mindestens einem der Ränder 110 des Trägerelements 100, vorzugsweise von beiden Rändern 110 des Trägerelements 100, in der Querrichtung 106 des Trägerelements 100 beabstandet.

Wie aus der vergrößerten Darstellung von Fig. 2 zu ersehen ist, umfasst jede Gasdiffusionslage-Dichtelement-Einheit 114 eine Gasdiffusionslage 116, welche an ihrem Umfang mit einem Dichtelement 118 versehen ist.

Die Gasdiffusionslage 116 kann eine anodenseitige oder eine kathodenseitige Gasdiffusionslage sein.

Die Gasdiffusionslage 116 weist eine Porosität auf, so dass ein fluides Medium, beispielsweise ein Brenngas oder ein Oxidationsmittel, in der Dickenrichtung 108 durch die Gasdiffusionslage 116 hindurchtreten kann.

Das Dichtelement 118 umfasst vorzugsweise ein Elastomermaterial und ist insbesondere vollständig aus einem Elastomermaterial gebildet.

Das Dichtelement 118 kann beispielsweise durch einen Spritzgießvorgang, einen Siebdruckvorgang oder einen Dispenserauftragsvorgang an der Gasdiffusionslage 116 erzeugt sein.

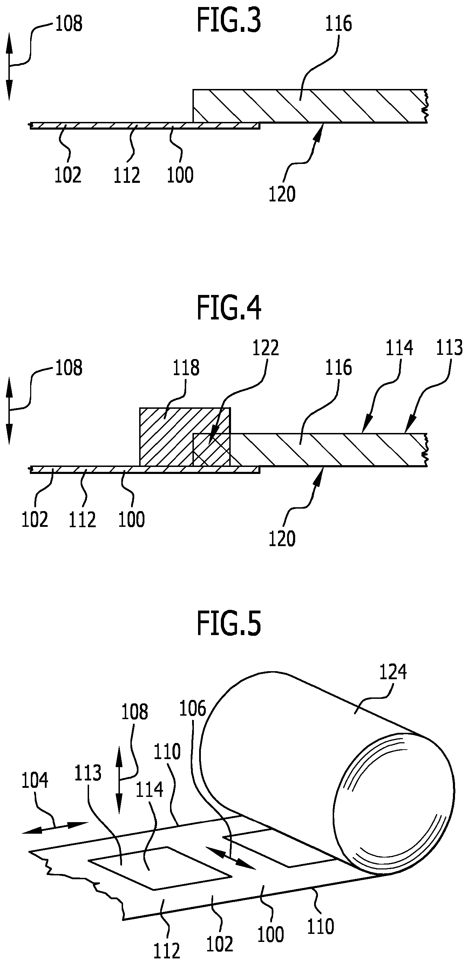

Wie beispielsweise aus Fig. 3 zu ersehen ist, kann die Gasdiffusionslage 116 bereits vor der Erzeugung des Dichtelements 118 an das Trägerelement 100 angebunden werden.

Das Trägerelement 100 ist vorzugsweise mit mindestens einer Ausnehmung 120 versehen, welche von einer Gasdiffusionslage-Dichtelement-Einheit 114 überdeckt wird, wenn dieselbe an dem Trägerelement 100 angeordnet ist.

Vorzugsweise ist jeder Gasdiffusionslage-Dichtelement-Einheit 114 eine solche Ausnehmung 120 im Trägerelement 100 zugeordnet.

Vorzugsweise erstreckt sich die Ausnehmung 120 in der Dickenrichtung 108 durch das Trägerelement 100 hindurch.

Wie in Fig. 4 dargestellt, kann das Dichtelement 118 so an der Gasdiffusionslage 116 erzeugt werden, dass es sowohl an die Gasdiffusionslage 116 als auch an das Trägerelement 100 angebunden wird.

Das Dichtelement 118 kann derart an der Gasdiffusionslage 116 erzeugt werden, dass das Dichtungsmaterial des Dichtelements 118 in einem Durchdringungsbereich 122 in das poröse Material der Gasdiffusionslage 116 eindringt, so dass das Dichtelement 118 stoffschlüssig und/oder formschlüssig und mechanisch stabil mit der Gasdiffusionslage 116 verbunden ist.

Wie in Fig. 5 dargestellt, kann das bandförmige Trägerelement 100, welches mindestens eine Gasdiffusionslage-Dichtelement-Einheit 114, vorzugsweise mehrere Gasdiffusionslage-Dichtelement-Einheiten 114, trägt, für Lagerung und Transport oder für andere Prozessschritte, beispielsweise für einen Wärmebehandlungsvorgang, zu einer Rolle 124 aufgewickelt werden.

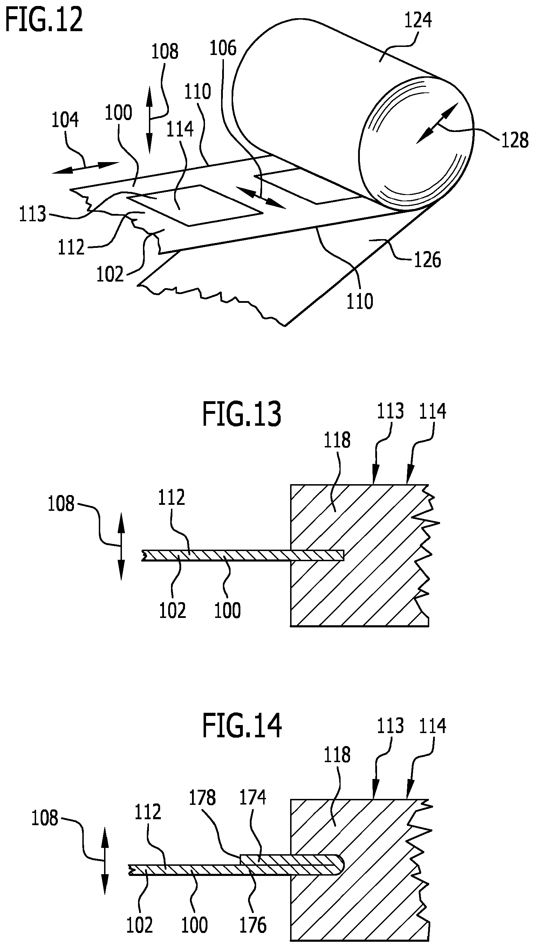

Wie aus Fig. 12 zu ersehen ist, kann beim Aufwickeln des Trägerelements 100 ein bandförmiges Zwischenelement 126 zusammen mit dem Trägerelement 100 aufgewickelt werden, so dass in einer radialen Richtung 128 der Rolle 124 aufeinanderfolgende Lagen des Trägerelements 100 und der daran angeordneten Gasdiffusionslage-Dichtelement-Einheiten 114 durch jeweils eine dazwischen angeordnete Lage des Zwischenelements 126 voneinander getrennt sind.

Dies dient dem Schutz des Trägerelements 100 und/oder der Gasdiffusionslage-Dichtelement-Einheiten 114 vor einer Beschädigung und/oder zur Reduktion von Anhaftung zwischen den in der radialen Richtung 128 der Rolle 124 aufeinanderfolgenden Lagen des Trägerelements 100 und der daran angeordneten Gasdiffusionslage-Dichtelement-Einheiten 114.

Wie in Fig. 6 dargestellt, kann eine an dem Trägerelement 100 angeordnete Gasdiffusionslage-Dichtelement-Einheit 114, insbesondere vor oder nach dem Aufwickeln des Trägerelements 100 zu einer Rolle 124, einem Behandlungsvorgang, insbesondere einem Beschichtungsvorgang, unterzogen werden.

Beispielsweise kann vorgesehen sein, dass die Gasdiffusionslage 116 und/oder das Dichtelement 118 mit einer Beschichtung aus einem Beschichtungsmaterial 130, beispielsweise einem Katalysatormaterial und/oder einem Ionomer/Membran-Material, versehen wird.

Das Beschichtungsmaterial 130 kann beispielsweise aus einem Beschichtungsmaterialauslass 132 auf eine Oberfläche 134 der Gasdiffusionslage-Dichtelement-Einheit 114, insbesondere der Gasdiffusionslage 116, aufgebracht werden.

Dabei kann die Gasdiffusionslage-Dichtelement-Einheit 114 während des Beschichtungsvorgangs stillgesetzt sein, oder das Trägerelement 100 mit der daran angeordneten Gasdiffusionslage-Dichtelement-Einheit 114 kann während des Beschichtungsvorgangs längs einer Bewegungsrichtung 136, welche insbesondere im Wesentlichen parallel zu der Längsrichtung 104 des Trägerelements 100 ausgerichtet sein kann, relativ zu dem Beschichtungsmaterialauslass 132 bewegt werden.

Wie unten noch näher erläutert werden wird, kann vorgesehen sein, dass das Trägerelement 100 zur Erhöhung der Positionsgenauigkeit während des Beschichtungsvorgangs mit einem oder mehreren Positionierelementen 166 versehen ist.

Ein zu einer Rolle gewickeltes Trägerelement-Gasdiffusionslage-Dichtelement-Einheit-Material 138 kann in einem Rollenprozess mit einem zu einer Rolle gewickelten Membranträgerelement-Membran-Material 140 und einem weiteren zu einer Rolle gewickelten Trägerelement-Gasdiffusionslage-Dichtelement-Einheit-Material 138' zu einer elektrochemisch aktiven Einheit 142 assembliert werden, wie dies schematisch in Fig. 7 dargestellt ist.

Dabei wird in einem ersten Prozessschritt jeweils eine erste Gasdiffusionslage-Dichtelement-Einheit 114, die an einem bandförmigen Trägerelement 100 angeordnet ist, nach dem Abwickeln von der Rolle 124 mit einer (beispielsweise katalysatorbeschichteten) Membran 144 verbunden, welche an dem abgewickelten Membran-Trägerelement 146 angeordnet ist. Dabei wird die Membran 144 von dem Membran-Trägerelement 146 abgelöst.

Das Membran-Trägerelement 146 läuft über zwei Umlenkrollen 148, 148' zu einer (zu einer Drehbewegung angetriebenen) Aufwickelrolle 150.

Das erste Trägerelement 100 läuft von der abgewickelten Rolle 124 zu einer (zu einer Drehbewegung angetriebenen) Aufwickelrolle 152.

Dabei wird die im ersten Prozessschritt erzeugte Einheit aus der ersten Gasdiffusionslage-Dichtelement-Einheit 114 und der Membran 144 zusammen mit dem ersten Trägerelement 100 längs einer Förderrichtung 154 der als Ganzes mit 156 bezeichneten Assembliervorrichtung gefördert.

In einem weiteren Prozessschritt wird eine zweite Gasdiffusionslage-Dichtelement-Einheit 114' von dem zweiten Trägerelement 100', welches von der zweiten Rolle 124' abgewickelt wird, auf die der ersten Gasdiffusionslage-Dichtelement-Einheit 114 gegenüberliegende Seite der Membran 144 assembliert, insbesondere laminiert. Dabei wird die zweite Gasdiffusionslage-Dichtelement-Einheit 114' von dem zweiten Trägerelement 100' abgelöst.

Das zweite Trägerelement 100' läuft über zwei Umlenkrollen 158, 158' zu einer (zu einer Drehbewegung angetriebenen) Aufwickelrolle 160.

Die aus der ersten Gasdiffusionslage-Dichtelement-Einheit 114, der Membran 144 und der zweiten Gasdiffusionslage-Dichtelement-Einheit 114' gebildete elektrochemisch aktive Einheit (Membran-Elektroden-Anordnung; MEA) 142 wird zusammen mit dem ersten Trägerelement 100' auf die Aufwickelrolle 152 aufgewickelt.

Das aufgewickelte Trägerelement-MEA-Material kann dann später wieder abgewickelt werden, um bei der Montage der elektrochemischen Vorrichtung, welche die elektrochemisch aktiven Einheiten 142 enthält, zusammen mit (nicht dargestellten) Bipolarplatten montiert zu werden.

Im aufgerollten Zustand kann die Trägerelement-MEA-Rolle gelagert und/oder transportiert werden.

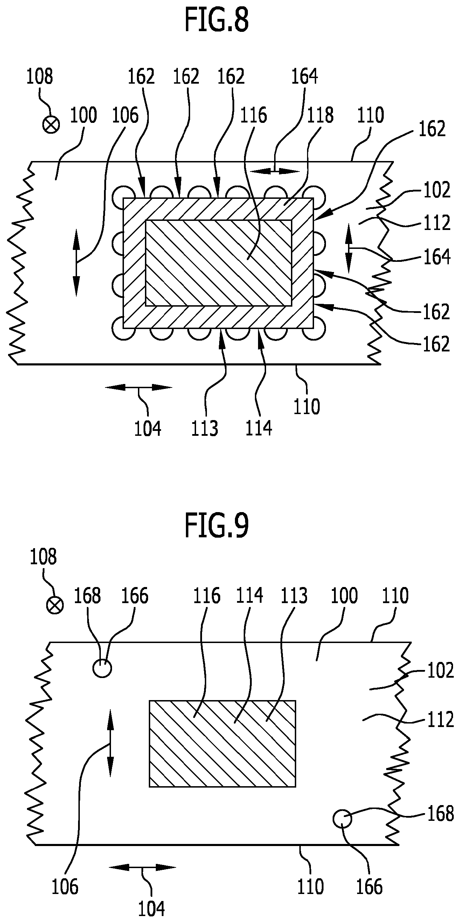

Bei einer in Fig. 8 dargestellten alternativen Ausführungsform eines Trägerelements 100 mit mindestens einer daran angeordneten Gasdiffusionslage-Dichtelement-Einheit 114 ist die Gasdiffusionslage-Dichtelement-Einheit 114 nicht über ihren gesamten Umfang hinweg mit dem Trägerelement 100 verbunden, sondern lediglich in einer Mehrzahl von Kontaktbereichen 162, welche längs einer Umfangsrichtung 164 der Gasdiffusionslage-Dichtelement-Einheit 114 aufeinanderfolgen und längs der Umfangsrichtung 164 der Gasdiffusionslage-Dichtelement-Einheit 114 voneinander beabstandet sind.

Dabei kann das Dichtelement 118 und/oder die Gasdiffusionslage 116 in den Kontaktbereichen 162 mit dem Trägerelement 100 verbunden sein.

Das Trägerelement 100 ist bei dieser Ausführungsform also nur partiell längs des Umfangs der Gasdiffusionslage-Dichtelement-Einheit 114 an die Gasdiffusionslage-Dichtelement-Einheit 114 angebunden.

Bei einer in Fig. 9 dargestellten alternativen Ausführungsform eines Trägerelements 100, an dem mindestens eine Gasdiffusionslage-Dichtelement-Einheit 114 angeordnet ist, weist das Trägerelement 100 ein oder mehrere Positionierelemente 166 auf, welche dazu dienen können, das Trägerelement 100 mit der daran angeordneten Gasdiffusionslage 116 vor dem Erzeugungsvorgang des Dichtelements 118 zu positionieren und/oder die Gasdiffusionslage-Dichtelement-Einheit 114 nach der Erzeugung des Dichtelements 118 an der Gasdiffusionslage 116 in einem Bearbeitungsvorgang oder in einem Assembliervorgang zu positionieren.

Dabei kann vorgesehen sein, dass jeder Gasdiffusionslage-Dichtelement-Einheit 114 jeweils mindestens ein Positionierelement 166, vorzugsweise mindestens zwei Positionierelemente 166, zugeordnet sind.

Jedes Positionierelement 166 kann beispielsweise als ein Durchbruch 168 im Trägerelement 100 ausgebildet sein.

Alternativ oder ergänzend zu Positionierelementen 166 können an dem Trägerelement 100 auch (nicht dargestellte) Bewegungselemente vorgesehen sein, die der Bewegung des Trägerelements 100 (zusammen mit einer daran angeordneten Gasdiffusionslage-Dichtelement-Einheit 114 oder ohne Gasdiffusionslage-Dichtelement-Einheit 114) dienen können.

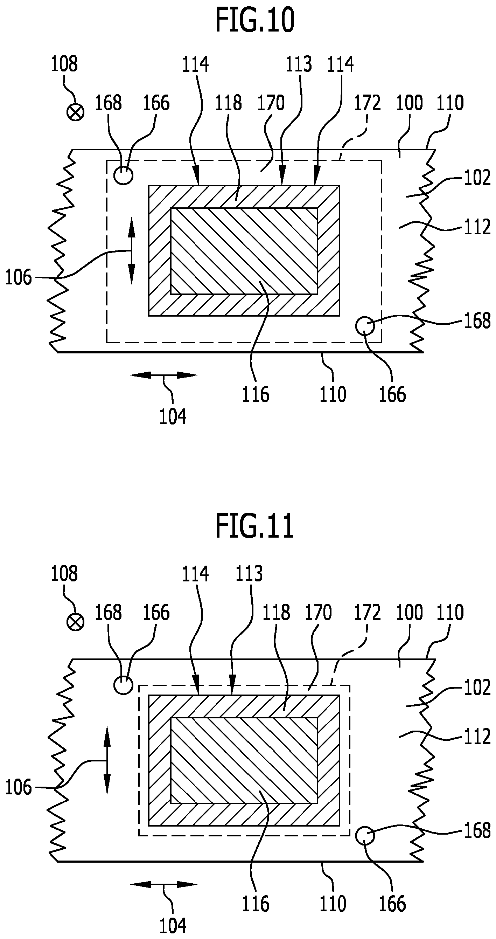

Wie in Fig. 10 dargestellt, kann vorgesehen sein, dass ein Trägerelement-Kernbereich 170, an welchem eine Gasdiffusionslage-Dichtelement-Einheit 114 angeordnet ist, längs einer Trennlinie 172 aus dem Trägerelement 100 herausgetrennt wird.

Der Trägerelement-Kernbereich 170 kann ein oder mehrere Positionierelemente 166 aufweisen.

Das Heraustrennen des Trägerelement-Kernbereichs 170 aus dem Trägerelement 100 kann mittels einer Vielzahl geeigneter Trennverfahren erfolgen, beispielsweise durch Stanzen, Schneiden, Rollschneiden, Laserschneiden oder Wasserstrahlschneiden.

Die Gasdiffusionslage-Dichtelement-Einheit 114 mit dem daran angeordneten Trägerelement-Kernbereich 170 kann nach dem Herauslösen aus dem Trägerelement 100 in einem nachfolgenden Prozess, beispielsweise bei der Assemblierung einer elektrochemisch aktiven Einheit 142 oder bei der Montage einer elektrochemischen Vorrichtung aus den elektrochemisch aktiven Einheiten 142, weiterverwendet werden.

Dabei kann eine genaue Positionierung der Gasdiffusionslage-Dichtelement-Einheit 114 mittels der an dem Trägerelement-Kernbereich 170 vorgesehenen Positionierelemente 166 erfolgen.

Nach der Verarbeitung in einem nachfolgenden Prozessschritt, beispielsweise bei der Assemblierung einer elektrochemisch aktiven Einheit 142 oder der elektrochemischen Vorrichtung, kann der zunächst an der Gasdiffusionslage-Dichtelement-Einheit 114 verbliebene Trägerelement-Kernbereich 170 ganz oder teilweise von der Gasdiffusionslage-Dichtelement-Einheit 114 entfernt werden. Dies kann wiederum mittels einer Vielzahl von geeigneten Abtrennverfahren erfolgen, beispielsweise mittels Stanzen, Schneiden, Rollschneiden, Laserschneiden oder Wasserstrahlschneiden.

Alternativ oder ergänzend hierzu kann auch vorgesehen sein, dass der Trägerelement-Kernbereich 170 durch Abziehen des Trägerelement-Kernbereichs 170 von der Gasdiffusionslage-Dichtelement-Einheit 114 und/oder durch Herauslösen eines Falzes des Trägerelement-Kernbereichs 170 aus der Gasdiffusionslage-Dichtelement-Einheit 114, insbesondere aus dem Dichtelement 118 derselben, von der Gasdiffusionslage-Dichtelement-Einheit 114 gelöst wird.

Wie in Fig. 11 dargestellt, kann der Trägerelement-Kernbereich 170, an welchem die Gasdiffusionslage-Dichtelement-Einheit 114 angeordnet ist, auch so aus dem Trägerelement 100 herausgetrennt werden, dass an dem Trägerelement 100 vorgesehene Positionierelemente 166 außerhalb des Trägerelement-Kernbereichs 170 liegen.

Auch in diesem Fall kann der Trägerelement-Kernbereich 170 nach einem nachfolgenden Prozessschritt ganz oder teilweise von der Gasdiffusionslage-Dichtelement-Einheit 114 abgetrennt oder abgelöst werden.

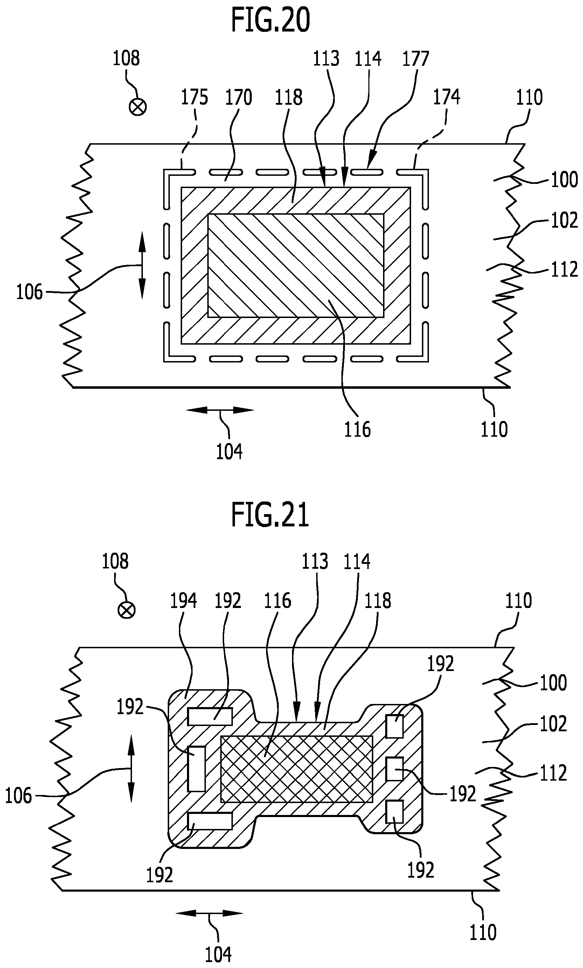

Bei einer in Fig. 20 dargestellten alternativen Ausführungsform eines Trägerelements 100, an welchem mindestens eine Gasdiffusionslage-Dichtelement-Einheit 114 angeordnet ist, ist eine längs einer Perforationslinie 175 verlaufende Perforation 177 vorgesehen, längs welcher ein Trägerelement-Kernbereich 170 aus dem Trägerelement 100 heraustrennbar ist.

Die Verbindung zwischen dem Trägerelement 100 und dem Dichtelement 118 und/oder der Gasdiffusionslage 116 kann bei allen Ausführungsformen des Trägerelements 100 so gestaltet sein, dass eine Abtrennung des Trägerelements 100 von der Gasdiffusionslage-Dichtelement-Einheit 114 durch geringe Krafteinwirkung möglich ist.

Die Verbindung zwischen dem Trägerelement 100 und der Gasdiffusionslage-Dichtelement-Einheit 114 kann insbesondere so gestaltet sein, dass das Trägerelement mit geringem Kraftaufwand vollständig von dem Dichtelement 118 und/oder von der Gasdiffusionslage 116 gelöst oder abgezogen werden kann.

Wie in Fig. 13 dargestellt, kann das Trägerelement 100 nur durch Haftung, ohne Formschluss, an das Dichtelement 118 der Gasdiffusionslage-Dichtelement-Einheit 114 angebunden sein.

Wie in den Fig. 14 bis 16 dargestellt, kann das Trägerelement 100 einen Falzabschnitt 174 umfassen, an welchem das Dichtelement 118 mit dem Trägerelement 100 verbunden ist.

Wie in Fig. 14 dargestellt, kann der Falzabschnitt 174 auf das Trägerelement 100 zurückgebogen sein, so dass der Falzabschnitt 174 im Wesentlichen flächig an einem Anlageabschnitt 176 des Trägerelements 100 anliegt.

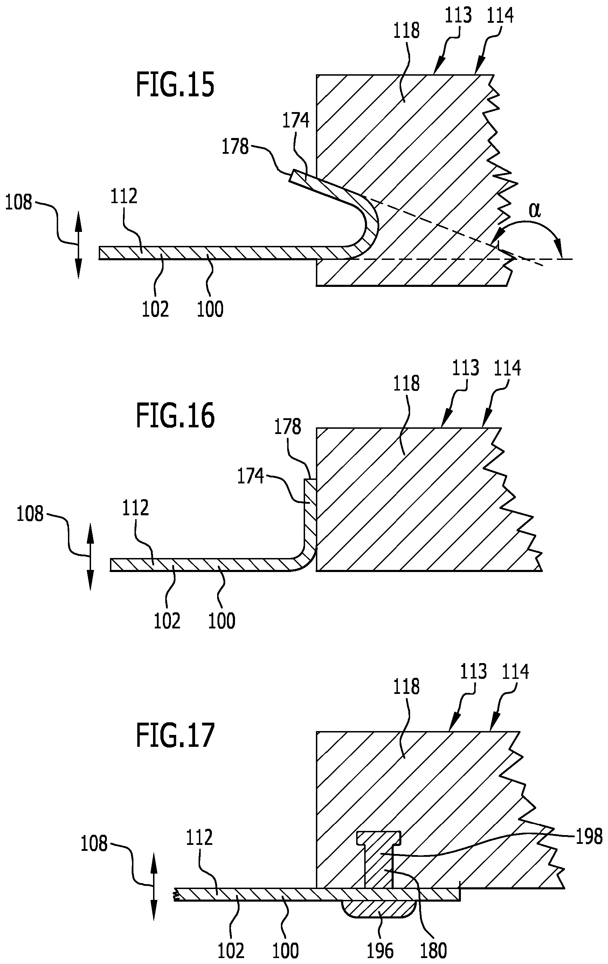

Wie in Fig. 15 dargestellt, kann der Falzabschnitt 174 des Trägerelements 100 um einen stumpfen Winkel α von mehr als 90°, vorzugsweise von mehr als 120° und/oder vorzugsweise von weniger als 160°, umgebogen sein, so dass ein Rand 178 des Falzabschnitts 174 des Trägerelements 100 von dem Dichtelement 118 weg weist.

Wie in Fig. 16 dargestellt, kann der Falzabschnitt 174 des Trägerelements 100 um einen Winkel von im Wesentlichen 90° abgekantet sein und im Wesentlichen flächig an dem Dichtelement 118 der Gasdiffusionslage-Dichtelement-Einheit 114 anliegen.

Bei einer in Fig. 17 dargestellten Ausführungsform eines Trägerelements 100, an dem eine Gasdiffusionslage-Dichtelement-Einheit 114 angeordnet ist, ist das Trägerelement 100 mit einem oder mehreren Halteelementen 180 versehen, welche dazu dienen, das Trägerelement 100 mit dem Dichtelement 118 zu verbinden.

Das mindestens eine Halteelement 180 kann vor oder nach der Erzeugung des Dichtelements 118 an der Gasdiffusionslage 116 der Gasdiffusionslage-Dichtelement-Einheit 114 an dem Trägerelement 100 angeordnet werden.

Das mindestens eine Halteelement 180 kann vor dem Assemblierprozess der elektrochemisch aktiven Einheit 142 von dem Trägerelement 100 und/oder von der Gasdiffusionslage-Dichtelement-Einheit 114 entfernt werden. Alternativ hierzu kann das mindestens eine Halteelement 180 auch im fertig montierten Zustand der elektrochemisch aktiven Einheit 142 an der Gasdiffusionslage-Dichtelement-Einheit 114 verbleiben.

Das mindestens eine Halteelement 180 kann zugleich als ein Positionierelement zur Positionierung des Trägerelements 100 und/oder der Gasdiffusionslage-Dichtelement-Einheit 114 in verschiedenen Prozessschritten dienen, beispielsweise bei der Erzeugung des Dichtelements 118 an der Gasdiffusionslage 116, bei der Assemblierung der elektrochemisch aktiven Einheit 142, bei der Vermessung der Gasdiffusionslage-Dichtelement-Einheit 114, bei der Vermessung der elektrochemisch aktiven Einheit 142 oder bei anderen Prozessschritten.

Für eine besonders genaue Positionierung mittels des mindestens einen Halteelements 180 kann vorgesehen sein, dass mindestens ein Positioniermerkmal an dem jeweiligen Halteelement 180 vorgesehen ist, beispielsweise in Form einer Bohrung oder einer Markierung.

Das mindestens eine Halteelement 180 und/oder das mindestens eine Positionierelement 166 kann insbesondere dazu verwendet werden, die Gasdiffusionslage-Dichtelement-Einheit 114 in einer Positioniereinheit zu positionieren, bevor oder nachdem die Gasdiffusionslage-Dichtelement-Einheit 114 von dem Trägerelement 100 gelöst worden ist.

Von einer solchen Positioniereinheit kann die vom Trägerelement 100 gelöste Gasdiffusionslage-Dichtelement-Einheit 114 dann mittels einer Handhabungsvorrichtung aufgenommen und in einem darauf folgenden Prozessschritt, beispielsweise bei der Assemblierung der elektrochemisch aktiven Einheit 142, verarbeitet werden.

Das mindestens eine Halteelement 180 kann beispielsweise einen Kopf 196 umfassen, welcher an dem Trägerelement 100 anliegen kann, und/oder einen Schaft 198 umfassen, welcher sich durch eine Durchtrittsöffnung in dem Trägerelement 100 hindurch und insbesondere in das Dichtelement 118 hinein erstrecken kann.

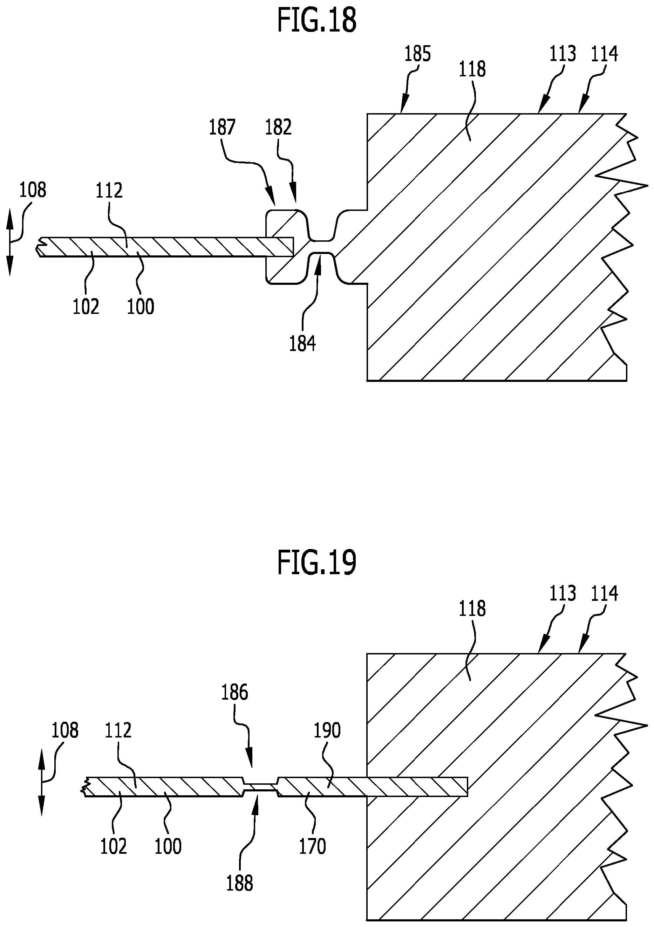

Bei einer in Fig. 18 dargestellten Ausführungsform eines Trägerelements 100, an welchem eine Gasdiffusionslage-Dichtelement-Einheit 114 angeordnet ist, ist das Dichtelement 118 der Gasdiffusionslage-Dichtelement-Einheit 114 in einem dem Trägerelement 100 zugewandten Randbereich 182 mit einer Sollbruchstelle 184 versehen, so dass die Gasdiffusionslage-Dichtelement-Einheit 114 leicht von dem Trägerelement 100 lösbar ist, ohne dass ein Abschnitt des Trägerelements 100 an der herausgelösten Gasdiffusionslage-Dichtelement-Einheit 114 verbleibt.

Hierbei kann ein Dichtelement-Außenbereich 187 an dem Trägerelement 100 verbleiben, während ein längs der Sollbruchstelle 184 von dem Dichtelement-Außenbereich 187 getrennter Dichtelement-Kernbereich 185 an der Gasdiffusionslage 116 verbleibt.

Bei der in Fig. 19 dargestellten Ausführungsform eines Trägerelements 100, an welchem eine Gasdiffusionslage-Dichtelement-Einheit 114 angeordnet ist, ist das Trägerelement 100 in einem dem Dichtelement 118 der Gasdiffusionslage-Dichtelement-Einheit 114 zugewandten Randbereich 186 mit einer Sollbruchstelle 188 versehen, wobei die Gasdiffusionslage-Dichtelement-Einheit 114 in einfacher Weise derart aus dem Trägerelement 100 heraustrennbar ist, dass ein auf der dem Dichtelement 118 zugewandten Seite der Sollbruchstelle 188 angeordneter Restbereich 190 des Trägerelements 100 nach dem Abtrennen der Gasdiffusionslage-Dichtelement-Einheit 114 an dem Dichtelement 118 verbleibt und somit einen an der Gasdiffusionslage-Dichtelement-Einheit 114 angeordneten Trägerelement-Kernbereich 170 bildet.

Bei der in Fig. 21 dargestellten Ausführungsform eines Trägerelements 100, an welchem mindestens eine Gasdiffusionslage-Dichtelement-Einheit 114 angeordnet ist, weist das Dichtelement 118 der Gasdiffusionslage-Dichtelement-Einheit 114 Medium-Durchtrittsöffnungen 192 auf, welche im montierten Zustand der elektrochemischen Vorrichtung Bestandteile jeweils mindestens eines Mediumkanals bilden, durch den ein fluides Medium (beispielsweise ein Brenngas, ein Oxidationsmittel oder ein Kühlmittel) den elektrochemisch aktiven Einheiten 142 der elektrochemischen Vorrichtung zuführbar oder aus den elektrochemisch aktiven Einheiten 142 der elektrochemischen Vorrichtung abführbar ist.

Das Dichtelement 118 ist nur in einem Außenbereich 194 mit dem Trägerelement 100 verbunden, und das Trägerelement 100 überlappt die Medium-Durchtrittsöffnungen 192 in dem Dichtelement 118 nicht. So wird insbesondere der Außenbereich 194 des Dichtelements 118, welcher sehr instabil und schwer zu positionieren sein kann, durch das Trägerelement 100 stabilisiert.

Die Gasdiffusionslage 116 ist bei dieser Ausführungsform vorzugsweise nicht mit dem Trägerelement 100 verbunden.

## Patentansprüche

1. Verfahren zum Herstellen einer elektrochemisch aktiven Einheit (142), die eine Membran (144) und mindestens eine Baugruppe (113), welche eine Gasdiffusionslage (116) und ein an der Gasdiffusionslage (116) erzeugtes Dichtelement (118) umfasst, umfasst,
wobei das Verfahren Folgendes umfasst:
- Erzeugen des Dichtelements (118) an der Gasdiffusionslage (116);
- Verbinden des Dichtelements (118) und/oder der Gasdiffusionslage (116) mit einem Trägerelement (100);
- Assemblieren der Membran (144) und der mindestens einen Baugruppe (113), welche die Gasdiffusionslage (116) und das Dichtelement (118) umfasst, zu der elektrochemisch aktiven Einheit (142);
**dadurch gekennzeichnet,**
**dass** das Dichtelement (118) durch einen Spritzgießvorgang, durch einen Siebdruckvorgang oder durch einen Dispenserauftragsvorgang erzeugt und bei seiner Erzeugung mit dem Trägerelement (100) verbunden wird und
**dass** das Trägerelement (100) mit mindestens einem Positionierelement (166) und/oder mit mindestens einem Halteelement (180) versehen ist.

2. Verfahren nach Anspruch 1, **dadurch gekennzeichnet, dass** die Gasdiffusionslage (116) vor dem Erzeugen des Dichtelements (118) mit dem Trägerelement (100) verbunden wird.

3. Verfahren nach einem der Ansprüche 1 oder 2, **dadurch gekennzeichnet, dass** das Dichtelement (118) längs seines gesamten Umfangs oder an einer Mehrzahl von längs einer Umfangsrichtung (164) des Dichtelements (118) voneinander beabstandeten Kontaktbereichen (162) mit dem Trägerelement (100) in Kontakt steht.

4. Verfahren nach einem der Ansprüche 1 bis 3, **dadurch gekennzeichnet, dass** das Trägerelement (100) eine Folie (112) und/oder ein Band (102) umfasst.

5. Verfahren nach einem der Ansprüche 1 bis 4, **dadurch gekennzeichnet, dass** nur ein Dichtelement (118) mit dem Trägerelement (100) verbunden wird.

6. Verfahren nach einem der Ansprüche 1 bis 4, **dadurch gekennzeichnet, dass** eine Mehrzahl von Dichtelementen (118) und/oder eine Mehrzahl von Gasdiffusionslagen (116) mit demselben Trägerelement (100) verbunden werden.

7. Verfahren nach einem der Ansprüche 1 bis 6, **dadurch gekennzeichnet, dass** das Trägerelement (100) mit dem daran angeordneten mindestens einen Dichtelement (118) und/oder der daran angeordneten mindestens einen Gasdiffusionslage (116) aufgewickelt wird,
wobei vorzugsweise mindestens ein Zwischenelement (126) zwischen aufeinanderfolgende Wickellagen des Trägerelements (100) eingebracht wird.

8. Verfahren nach einem der Ansprüche 1 bis 7, **dadurch gekennzeichnet, dass** mindestens ein an dem Trägerelement (100) angeordnetes Dichtelement (118) und/oder mindestens eine an dem Trägerelement (100) angeordnete Gasdiffusionslage (116) mit einem Beschichtungsmaterial (130) beschichtet wird.

9. Verfahren nach einem der Ansprüche 1 bis 8, **dadurch gekennzeichnet, dass** das Assemblieren der Membran (144) und der mindestens einen Baugruppe (113), welche eine Gasdiffusionslage (116) und ein Dichtelement (118) umfasst, in einem Rollenprozess erfolgt, in welchem die mindestens eine an dem Trägerelement (100) angeordnete Baugruppe (113) und die an einem Membran-Trägerelement (146) angeordnete Membran (144) zusammengeführt werden.

10. Verfahren nach einem der Ansprüche 1 bis 9, **dadurch gekennzeichnet, dass** ein mit dem Dichtelement (118) und/oder mit der Gasdiffusionslage (116) verbundener Trägerelement-Kernbereich (170) aus dem Trägerelement (100) herausgetrennt wird
und/oder
dass das Dichtelement (118) eine Sollbruchstelle (184) aufweist, längs welcher ein Dichtelement-Kernbereich (185) von einem Dichtelement-Außenbereich (187) abgetrennt wird.

11. Verfahren nach einem der Ansprüche 1 bis 10, **dadurch gekennzeichnet, dass** das Trägerelement (100) nach der Assemblierung der elektrochemisch aktiven Einheit (142) an der Baugruppe (113) verbleibt.

12. Trägerelement für eine Baugruppe (113), welche eine Gasdiffusionslage (116) und ein an der Gasdiffusionslage (116) erzeugtes Dichtelement (118) umfasst, wobei das Dichtelement (118) und/oder die Gasdiffusionslage (116) mit dem Trägerelement (100) verbunden ist,
**dadurch gekennzeichnet,**
**dass** das Dichtelement (118) durch einen Spritzgießvorgang, durch einen Siebdruckvorgang oder durch einen Dispenserauftragsvorgang erzeugt und bei seiner Erzeugung mit dem Trägerelement (100) verbunden worden ist und
**dass** das Trägerelement (100) mit mindestens einem Positionierelement (166) und/oder mit mindestens einem Halteelement (180) versehen ist.

13. Elektrochemisch aktive Einheit, umfassend
eine Membran (144),
mindestens eine Baugruppe (113), welche eine Gasdiffusionslage (116) und ein an der Gasdiffusionslage (116) erzeugtes Dichtelement (118) umfasst, und
mindestens ein Trägerelement (100) nach Anspruch 12.

14. Elektrochemisch aktive Einheit nach Anspruch 13, **dadurch gekennzeichnet, dass** die Baugruppe (113) an ihrem äußeren Umfang zumindest bereichsweise an das Trägerelement (100) angebunden ist
und/oder
dass ein Außenbereich (194) des Dichtelements (118) durch das Trägerelement (100) stabilisiert wird.

15. Elektrochemisch aktive Einheit nach einem der Ansprüche 13 oder 14, **dadurch gekennzeichnet, dass** das Trägerelement (100) nur mit dem Dichtelement (118) der Baugruppe (113) in Kontakt steht.

## Claims

1. Method for producing an electrochemically active unit (142) that comprises a membrane (144) and at least one assembly (113), which comprises a gas diffusion layer (116) and a sealing element (118) produced on the gas diffusion layer (116), wherein the method comprises the following:
- producing the sealing element (118) on the gas diffusion layer (116);
- connecting the sealing element (118) and/or the gas diffusion layer (116) to a support element (100);
- assembling the membrane (144) and the at least one assembly (113), which comprises the gas diffusion layer (116) and the sealing element (118), to form the electrochemically active unit (142);
**characterized in that**
the sealing element (118) is produced by means of an injection molding operation, by means of a screen printing operation, or by means of a dispenser application operation and, in the production thereof, is connected to the support element (100) and
**in that** the support element (100) is provided with at least one positioning element (166) and/or with at least one holding element (180).

2. Method in accordance with Claim 1, **characterized in that** the gas diffusion layer (116) is connected to the support element (100) before the production of the sealing element (118).

3. Method in accordance with either of Claims 1 or 2, **characterized in that** the sealing element (118) is in contact with the support element (100) along the entire periphery of said sealing element (118) or at a plurality of contact regions (162) spaced at a distance from each other along a peripheral direction (164) of the sealing element (118).

4. Method in accordance with any one of Claims 1 to 3, **characterized in that** the support element (100) comprises a foil (112) and/or a band (102).

5. Method in accordance with any one of Claims 1 to 4, **characterized in that** only one sealing element (118) is connected to the support element (100).

6. Method in accordance with any one of Claims 1 to 4, **characterized in that** a plurality of sealing elements (118) and/or a plurality of gas diffusion layers (116) are connected to the same support element (100).

7. Method in accordance with any one of Claims 1 to 6, **characterized in that** the support element (100) is wound up with the at least one sealing element (118) arranged thereon and/or the at least one gas diffusion layer (116) arranged thereon,
wherein preferably at least one intermediate element (126) is introduced between successive wound layers of the support element (100).

8. Method in accordance with any one of Claims 1 to 7, **characterized in that** at least one sealing element (118) arranged on the support element (100) and/or at least one gas diffusion layer (116) arranged on the support element (100) is coated with a coating material (130).

9. Method in accordance with any one of Claims 1 to 8, **characterized in that** the assembling of the membrane (144) and the at least one assembly (113), which comprises a gas diffusion layer (116) and a sealing element (118), takes place in a rolling process in which the at least one assembly (113) arranged on the support element (100) and the membrane (144) arranged on a membrane support element (146) are joined.

10. Method in accordance with any one of Claims 1 to 9, **characterized in that** a support element core region (170) connected to the sealing element (118) and/or to the gas diffusion layer (116) is separated out of the support element (100)
and/or
**in that** the sealing element (118) has a predetermined breaking point (184), along which a sealing element core region (185) is separated from a sealing element outside region (187).

11. Method in accordance with any one of Claims 1 to 10, **characterized in that** the support element (100) remains on the assembly (113) after the assembling of the electrochemically active unit (142).

12. Support element for an assembly (113), which comprises a gas diffusion layer (116) and a sealing element (118) produced on the gas diffusion layer (116), wherein the sealing element (118) and/or the gas diffusion layer (116) is connected to the support element (100),
**characterized in that**
the sealing element (118) is produced by means of an injection molding operation, by means of a screen printing operation, or by means of a dispenser application operation and, in the production thereof, is connected to the support element (100) and
**in that** the support element (100) is provided with at least one positioning element (166) and/or with at least one holding element (180).

13. Electrochemically active unit, comprising
a membrane (144),
at least one assembly (113), which comprises a gas diffusion layer (116) and a sealing element (118) produced on the gas diffusion layer (116), and
at least one support element (100) in accordance with Claim 12.

14. Electrochemically active unit in accordance with Claim 13, **characterized in that** the assembly (113) is connected at its outer periphery, at least in regions, to the support element (100),
and/or
**in that** an outside region (194) of the sealing element (118) is stabilized by the support element (100).

15. Electrochemically active unit in accordance with either of Claims 13 or 14, **characterized in that** the support element (100) is in contact only with the sealing element (118) of the assembly (113).

## Revendications

1. Procédé de fabrication d'une unité à action électrochimique (142), qui comprend une membrane (144) et au moins un module (113) comprenant une couche de diffusion de gaz (116) et un élément d'étanchéité (118) généré sur la couche de diffusion de gaz (116), dans lequel le procédé comprend ce qui suit :
- la génération de l'élément d'étanchéité (118) sur la couche de diffusion de gaz (116) ;
- la liaison de l'élément d'étanchéité (118) et/ou de la couche de diffusion de gaz (116) à un élément de support (100) ;
- l'assemblage de la membrane (144) et de l'au moins un module (113), qui comprend la couche de diffusion de gaz (116) et l'élément d'étanchéité (118), en l'unité à action électrochimique (142) ;
**caractérisé en ce**
**que** l'élément d'étanchéité (118) est généré par une opération de moulage par injection, par une opération de sérigraphie ou par une opération d'application par distributeur et est relié à l'élément de support (100) lors de sa génération et
**que** l'élément de support (100) est pourvu d'au moins un élément de positionnement (166) et/ou d'au moins un élément de maintien (180).

2. Procédé selon la revendication 1, **caractérisé en ce que** la couche de diffusion de gaz (116) est reliée à l'élément de support (100) avant la génération de l'élément d'étanchéité (118).

3. Procédé selon l'une quelconque des revendications 1 ou 2, **caractérisé en ce que** l'élément d'étanchéité (118) est en contact avec l'élément de support (100) le long de toute sa périphérie ou sur une pluralité de zones de contact (162) espacées les unes des autres le long d'une direction périphérique (164) de l'élément d'étanchéité (118).

4. Procédé selon l'une quelconque des revendications 1 à 3, **caractérisé en ce que** l'élément de support (100) comprend un film (112) et/ou une bande (102).

5. Procédé selon l'une quelconque des revendications 1 à 4, **caractérisé en ce qu'**un seul élément d'étanchéité (118) est relié à l'élément de support (100).

6. Procédé selon l'une quelconque des revendications 1 à 4, **caractérisé en ce qu'**une pluralité d'éléments d'étanchéité (118) et/ou une pluralité de couches de diffusion de gaz (116) sont reliés au même élément de support (100).

7. Procédé selon l'une quelconque des revendications 1 à 6, **caractérisé en ce que** l'élément de support (100) est enroulé avec l'au moins un élément d'étanchéité (118) disposé dessus et/ou l'au moins une couche de diffusion de gaz (116) disposée dessus,
dans lequel au moins un élément intermédiaire (126) est de préférence introduit entre des couches d'enroulement successives de l'élément de support (100).

8. Procédé selon l'une quelconque des revendications 1 à 7, **caractérisé en ce qu'**au moins un élément d'étanchéité (118) disposé sur l'élément de support (100) et/ou au moins une couche de diffusion de gaz (116) disposée sur l'élément de support (100) sont revêtus d'un matériau de revêtement (130).

9. Procédé selon l'une quelconque des revendications 1 à 8, **caractérisé en ce que** l'assemblage de la membrane (144) et de l'au moins un module (113), qui comprend une couche de diffusion de gaz (116) et un élément d'étanchéité (118), est effectué dans un processus à rouleaux, dans lequel l'au moins un module (113) disposé sur l'élément de support (100) et la membrane (144) disposée sur un élément de support de membrane (146) sont réunis.

10. Procédé selon l'une quelconque des revendications 1 à 9, **caractérisé en ce qu'**une zone centrale d'élément de support (170) reliée à l'élément d'étanchéité (118) et/ou à la couche de diffusion de gaz (116) est séparée de l'élément de support (100)
et/ou
que l'élément d'étanchéité (118) présente un point de rupture prédéterminé (184), le long duquel une zone centrale d'élément d'étanchéité (185) est séparée d'une zone extérieure d'élément d'étanchéité (187).

11. Procédé selon l'une quelconque des revendications 1 à 10, **caractérisé en ce que** l'élément de support (100) reste sur le module (113) après l'assemblage de l'unité à action électrochimique (142).

12. Elément de support pour un module (113), qui comprend une couche de diffusion de gaz (116) et un élément d'étanchéité (118) généré sur la couche de diffusion de gaz (116), dans lequel l'élément d'étanchéité (118) et/ou la couche de diffusion de gaz (116) sont reliés à l'élément de support (100),
**caractérisé en ce**
**que** l'élément d'étanchéité (118) a été généré par une opération de moulage par injection, par une opération de sérigraphie ou par une opération d'application par distributeur et a été relié à l'élément de support (100) lors de sa génération et
**que** l'élément de support (100) est pourvu d'au moins un élément de positionnement (166) et/ou d'au moins un élément de maintien (180).

13. Unité à action électrochimique, comprenant
une membrane (144),
au moins un module (113), qui comprend une couche de diffusion de gaz (116) et un élément d'étanchéité (118) généré sur la couche de diffusion de gaz (116), et
au moins un élément de support (100) selon la revendication 12.

14. Unité à action électrochimique selon la revendication 13, **caractérisée en ce que** le module (113) est fixé sur sa périphérie extérieure au moins par zones à l'élément de support (100)
et/ou
qu'une zone extérieure (194) de l'élément d'étanchéité (118) est stabilisée par l'élément de support (100).

15. Unité à action électrochimique selon l'une quelconque des revendications 13 ou 14, **caractérisée en ce que** l'élément de support (100) n'est en contact qu'avec l'élément d'étanchéité (118) du module (113).
